# EUROPEAN PATENT APPLICATION

(11) **EP 4 697 229 A1**
(43) Date of publication of application: **18.02.2026**
(21) Application number: 25194276.9
(22) Date of filing: 06.08.2025
(51) Int. Cl.: G06F 40/237, G06F 40/157, G06F 40/16, G06F 40/216, G06F 40/284, G06F 40/30

(54) **COMPOUND WORD SPLITTING BY VOTING AMONG MULTIPLE GENERATIVE ARTIFICIAL INTELLIGENCE (AI) WORD SPLITS**

(30) Priority: 12.08.2024 US 202463682251 P; 31.12.2024 US 202419007018
(71) Applicant: eBay Inc., San Jose, CA 95125 (US)
(72) Inventor: YILMAZ, Ümit, SAN JOSE, 95125 (US); STEIN, Daniel, SAN JOSE, 95125 (US); MERKELBACH, Kilian, SAN JOSE, 95125 (US)
(74) Representative: Müller-Boré & Partner Patentanwälte PartG mbB

(57) **Abstract**

The technology relates to determining word splits for compound words using a large language model (LLM). It can be used to enhance search engine performance in languages where words are often combined as compound words, such as German and Dutch. An example method involves prompting the LLM with different prompts to generate multiple candidate word splits for a compound word. A voting technique is applied to select the most appropriate word split. The method may include using different LLM temperatures and compound word-word split pairs from a domain-specific dataset as examples within the prompts. The voting technique may identify the word split that appears most frequently. If no majority, the method selects a candidate word split based on the number of splits, either the highest or lowest, and in some cases, selects a random word split from candidate word splits with the highest or lowest number of splits.

## Description

### CROSS-REFERENCE TO RELATED APPLICATIONS

This application claims priority to U.S. Provisional Application No. 63/682,251, entitled "Voting with Generative AI for German Compound Splitting in ECommerce," filed on August 12, 2024, the entirety of which is expressly incorporated herein by reference.

### BACKGROUND

Compound words are formed by combining two or more words to create a single term with a specific meaning. In some languages, compound words can be split in different ways, resulting in variations in meaning and usage. The preferred split often depends on the context and linguistic rules of the language.

### SUMMARY

At a high level, the technology relates to determining word splits for compound words using a large language model (LLM). In some cases, the technology may also be used for determining compound words from word splits. More specifically, the technology involves prompting the LLM with a variety of different prompts to generate multiple candidate word splits for a given compound word. A voting technique is then applied to these candidate word splits to select the most appropriate word split for the compound word. In aspects, the technology allows for better splitting of compound words for a particular use context.

An example method includes using different LLM temperature for the plurality of prompts to the LLM. Additionally, the prompts may include compound word-word split pairs mined from a domain-specific data source as examples of how compound words are split for a give context or use case.

In this example, the voting technique determines the word split by identifying the candidate word split that appears most frequently among the different prompts. If the majority of outputs responsive to the different prompts are the same candidate word split, that candidate word split can be selected as the word split for the compound word. If no majority candidate word split is found, i.e., the candidate word split outputs exclude a majority candidate word split, the method selects a candidate word split based on the number of splits, either the highest or the lowest number of splits. In cases where there is no majority candidate word split based on the number of splits, a subset of candidate word splits with the same number of splits is identified, such as a subset of those having the highest or lowest number of word splits. One of the candidate word splits from the subset may then be randomly selected and provided as the word split for the compound word.

This summary is intended to introduce a selection of concepts in a simplified form that is further described in the detailed description section of this disclosure. The summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 illustrates an example operating environment in which the technology may be employed, in accordance with an aspect described herein;
FIG. 2 illustrates an example in which candidate word splits are generated using an LLM, in accordance with an aspect described herein;
FIG. 3 illustrates an example in which a word split is determined using a voting engine, in accordance with an aspect described herein;
FIG. 4A and FIG. 4B illustrate examples of the technology in use with a search engine, in accordance with aspects described herein;
FIG. 5A and FIG. 5B illustrate examples of the technology that use a compound word index, in accordance with aspects described herein
FIG. 6 illustrates an example method 600 for splitting compound words, in accordance with an aspect described herein;
FIG. 7 illustrates another example method 700 for splitting compound words, in accordance with an aspect described herein; and
FIG. 8 illustrates an example computing device suitable for implementing aspects of the technology, in accordance with an aspect described herein.

### DETAILED DESCRIPTION

Search engines have become an integral part of using the internet, as they are required to effectively use the internet, since internet-accessible data is hosted across a vast web of interconnected servers. Many search engines work by crawling and indexing web pages, then using algorithms to rank and retrieve the most relevant results based on user queries. The evolution of search engines has seen significant advancements, from early directory-based systems to sophisticated algorithms that can evaluate the quality and relevance of web pages based on incoming links.

When handling compound words, search engines face unique challenges, especially in languages with significant compound word usage, such as German. In German and other language, such as Dutch and Finnish, compound words can be formed by combining two or more words to create a new word with a specific meaning. For example, the German word "Arbeitshandschuhe" (work gloves) combines "Arbeit" (work) and "Handschuhe" (gloves). Search engines must accurately split these compound words to ensure relevant search results. For example, splitting "Arbeitshandschuhe" (work gloves) into "Arbeit" (work) and "Handschuhe" (gloves) may return accurate search results for gloves that are durable and made for more labor intensive tasks. However, splitting "Arbeitshandschuhe" (work gloves) into "Arbeit" (work), "Hand" (hand), and "Schuhe" (shoes) may return results for shoes, quite the opposite of what the user intended.

Often, this issue is due to the technical functioning of the search engine, as many search using vector-based algorithms. In essence, splitting a word improperly can move the vector used to identify the results in the wrong direction. For instance, splitting "Arbeitshandschuhe" into the constituent word "Schuhe" may move the resulting vector closer to shoes in the vector space. Thus, when using algorithms like KNN (k-nearest neighbors) to return search results in the vector space, some search results will be missed based on the vector distance used.

Compounding the problem, specific data domains may tend to split words differently from traditional linguistic splitting. For instance, one word may typically be split in a general linguistic sense, while in a specific data domain, such as medical records, finance, ecommerce, and so forth, the compound word may often see a different, more contextually relevant split.

Additionally, languages such as German offer speakers and writers significant lexicographic flexibility to create compound words. Native human speakers are adept at understanding and processing these compound words. However, machines can fall short at understanding such words, often because a user enters a compound word that is infrequently used or not previously seen. In such cases, traditionally searching algorithms may not have a reference point to ground the compound word, leading to anomalous vector representations of the compound word and poor search result retrieval as a result. While a vector-based search would be negatively impacted by wrong compound word splits, a keyword-based system might break entirely. In the example "Arbeitshandschuhe," a vector-based search engine might still deduce the meaning if the word is split too much (splitting "Hand" and "Schuhe"), but a keyword-based search engine lacks semantic understanding of the words and the result would be even worse than for an embedding-based search.

Conventional systems for splitting compound words into their constituent parts often rely on linguistic rules or statistical methods. These systems may use predefined dictionaries or databases to identify possible splits. However, these methods can be limited in their accuracy and may not always provide the best results for specific use cases, such as ecommerce or medical searches, as noted above. As noted, these conventional linguistic rules and statistical methods tend to split words from a generic context, and may not split words along a more contextually relevant context, thus limiting search engines when searching across more specific domains.

To alleviate some of these issues, the present technology generally provides word splits for compound words, or vice versa, using an LLM and a voting system. As an example, a process can begin by prompting the LLM with a variety of different prompts to generate multiple candidate word splits for a given compound word. These prompts may provided to the LLM at different LLM temperatures, such that the LLM temperature adjusts the randomness of the LLM's responses, thereby varying the randomness of the LLM output for the prompt based on the LLM temperature. In some cases, the prompts may be given a set of compound word-word split pairs as examples for the LLM. The compound word-word split pairs may be mined from a domain-specific data source, such as that of ecommerce, medical records, finance, etc., and retrieved from a domain-specific dataset. This can help the LLM understand how compound words are typically split in a given context or use case. As will be further discussed, other aspects of the prompts may be varied as well.

Once the LLM provides a plurality of candidate word splits, a voting technique is applied to select one of the word splits for the compound word. Accordingly, if a majority of the candidate word splits are the same split, then that candidate word split can be selected as the word split.

In some cases, there may be no majority candidate word split within the LLM outputs, i.e., the plurality of candidate word split outputs excludes a majority candidate word split. For example, a majority candidate word split may be a candidate word split that appears most frequently among the different candidate word split outputs generated by the LLM when prompted with various instructions. As such, a candidate word split may be selected from the output candidate words splits as a majority candidate word split when the candidate word split appears more frequently than the other candidate word splits. In some cases, the method might select a majority candidate word split based on the number of splits, either the highest or the lowest. For instance, if one candidate word split has been split into four constituent words, and the remaining candidate word splits were split into three or fewer constituent words, then the candidate word split having the four constituent words may be selected when the system is configured to select based on the highest number of splits. Alternatively, when selecting for the lowest number of splits, if one candidate word split has been split into two constituent words, and the remaining candidate word splits were split into three or more constituent words, then the candidate word split having the two constituent words may be selected. In some cases, the selection based on whether the candidate word splits have the highest number or lowest number of splits is preconfigured, as will be further discussed.

In an aspect, if there is no majority candidate word split based on the number of splits, a subset of candidate word splits with the same number of splits is identified, and one is randomly selected. The subset may be identified based on whether the number of splits for each candidate word split is the highest or lowest number of splits. For example, if two candidate word splits have three constituent words and a third is split into two words, when selecting for the highest number of candidate word splits, the system may randomly select one of the two candidate word splits having the three constituent words. Alternatively, when selecting for the lowest number of splits, for instance, if two candidate word splits have two constituent words and a third is split into three words, the system may randomly select a candidate word split from those having the two constituent words.

As will be understood and further described, the process may also be performed to identify a compound word for a given word split.

In general, this technology allows for better splitting of compound words, which can improve the accuracy and relevance of search results in search engines, especially in languages with significant compound word usage and when searching domain-specific databases. For instance, by varying the temperature of the LLM, more randomness in the output is seen, thus allowing more variations among the candidate word splits, while at the same time, still biasing the final outcome slightly to a non-random solution. The additional randomness, however, provides a system with the ability to capture word splits that it might not otherwise capture using the LLM, thus providing the system a better chance to select the more appropriate split for the context. The voting technique can be used to select the more contextually relevant candidate word split. This is advantageous over traditional splitting methods that do not provide more than one result or do not select from more than one result, thus making it less likely that they will provide a contextually relevant result when needed.

This is also advantageous for traditional systems that do not use LLMs for word splitting, such as those using a simple database look-up system. Using an LLM allows the LLM to provide a candidate word split based on an understanding of a compound word as determined from its training, which may be on a vast quantity of data. Thus, the LLM itself may have a better context of understanding than other traditional systems. The LLM also allows some room for randomness, as previously noted, so that it can identify splits that otherwise may not have been identified using a simple database look-up. Further still, the LLM can provide candidate word splits for compound words that the LLM has never seen before, whereas many traditional database look-up systems cannot. Moreover, using an LLM allows for further contextual understanding outside of its traditional training by providing instructions in the prompts themselves, such as assigning the LLM a role or providing the LLM with example words splits from a particular domain. Thus, even if the LLM has been trained on a general information corpus, it may be selectively configured through prompt generation to output more contextually relevant results.

The combination of the LLM with the voting system also has benefits over traditional technology. For instance, a voting technique may be executed offline on a domain-specific dataset. An example domain-specific dataset includes compound words identified from domain-specific data sources and split into corresponding word splits by a human. As such, the domain-specific dataset may capture context-relevant word splits. Various voting techniques can be adjusted to increase the effectiveness of the voting technique when selecting a context-relevant candidate word split. Thus, a particular voting technique, such as selecting candidate word splits based on the highest or lowest number of splits, can be selected for a specific domain, which further improves the system's ability to determine an appropriate word split for a given compound word within a particular context. Overall, combining the varied use of the LLM with selecting a word split using a voting technique has the ability to outperform existing word splitting technologies for search engines and other applications.

Beyond these benefits and improvements, the technology described herein also has the ability to improve the functioning of a computing system when executing word splits. For example, a generic LLM may be trained and used for different domains by modifying the prompts given to the LLM and then selecting from different candidate word splits using a voting method. As such, this may avoid having to train different models for different domain usage, thereby reducing or eliminating the computational spend required for training different models.

The method further has the added benefit of improving search engines. As noted previously, some search engine technologies use vector-based identification and retrieval of search results. By improving word splitting to be more contextually relevant, a search engine may identify better results by executing a search query vector determined from a more contextually appropriate word split.

Furthermore, the use of different prompts to cause an LLM to generate a variety of potentially different candidate word splits for a given compound word is not believed to be a routine and conventionally performed process for generating word splits. Moreover, it is also understood that the use of a voting technique to select a word split from among various LLM outputs is also not a routine and conventionally performed process for generating word splits. Furthermore, it is further believed that it is not a routine and conventionally performed process for a search engine to execute a search query using a word split selected in response to a voting technique performed on various LLM outputs for word splitting.

It will be realized that the methods previously described are only examples that can be practiced from the description that follows, and the examples are provided to more easily understand the technology and recognize its benefits. Additional examples are now described with reference to the figures.

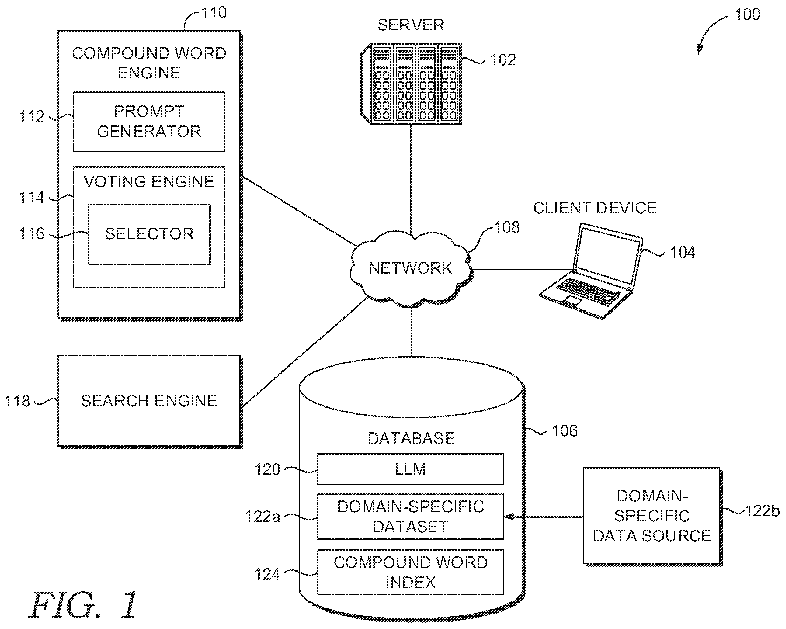

With reference to FIG. 1, an example operating environment 100 in which aspects of the technology may be employed is provided. Among other components or engines not shown, operating environment 100 comprises server 102, client device 104, and database 106, which are communicating via network 108 to compound word engine 110.

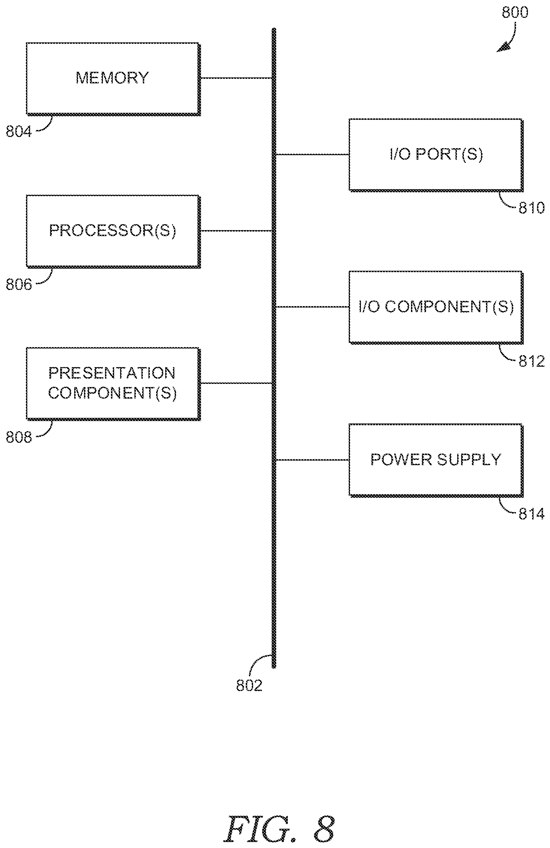

Generally, server 102 is a computing device that implements functional aspects of operating environment 100, such as one or more functions of compound word engine 110. One suitable example of a computing device that can be employed as server 102 is described as computing device 800 with respect to FIG. 8.

Client device 104 is generally a computing device, such as computing device 800 of FIG. 8. Client device 104 may perform various functions described herein. In aspects, client device 104 may perform functions described with respect to compound word engine 110.

As with other components of FIG. 1, server 102 and client device 104 are each intended to represent one or more devices. In implementations, client device 104 is a client-side or front-end device, and server 102 represents a back-end or server-side device. It will be understood that some implementations of the technology will comprise either a client-side or front-end computing device, a back-end or server-side computing device, or both, executing any combination of functions for document source detection. FIG. 1 is simply one example illustration of a computing environment in which the technology may be employed, although it will be recognized that other arrangements of devices and functions may be used with the technology as well. All are intended to be within the scope of the present disclosure, as will be further noted.

Database 106 generally stores information, including data, computer instructions (e.g., software program instructions, routines, or services), or models used in embodiments of the described technologies. Although depicted as a single database component, database 106 may be embodied as one or more databases or may be in the cloud.

Network 108 may include one or more networks (e.g., public network or virtual private network [VPN]), as shown with network 108. Network 108 may include, without limitation, one or more local area networks (LANs), wide area networks (WANs), or any other communication network or method.

With continued reference to FIG. 1, it is noted and again emphasized that any additional or fewer components, in any arrangement, may be employed to achieve the desired functionality within the scope of the present disclosure. Although the various components of FIG. 1 are shown with lines for the sake of clarity, in reality, delineating various components is not so clear, and metaphorically, the lines may more accurately be grey or fuzzy. Although some components of FIG. 1 are depicted as single components, the depictions are intended as examples in nature and in number and are not to be construed as limiting for all implementations of the present disclosure. The functionality of operating environment 100 can be further described based on the functionality and features of its components. Other arrangements and elements (e.g., machines, interfaces, functions, orders, and groupings of functions, etc.) can be used in addition to or instead of those shown, and some elements may be omitted altogether.

Further, some of the elements described in relation to FIG. 1 are functional entities that may be implemented as discrete or distributed components or in conjunction with other components, and in any suitable combination and location. Various functions described herein are being performed by one or more entities and may be carried out by hardware, firmware, or software. For instance, various functions may be carried out by a processor executing computer-executable instructions stored in memory.

To split compound words, compound word engine 110 may execute, for example, prompt generator 112 and voting engine 114. As a high level example, prompt generator 112 generates different prompts to instruct LLM 120 to generate candidate word splits for splitting a compound word. Voting engine 114 may then use a voting technique to identify and select a candidate word split for use as the word split for the compound word. In some aspects, the word split determined by compound word engine 110 may be provided to search engine 118 for use in a search query to identify and return search results.

In general, prompt generator 112 generates a plurality of different prompts for an LLM, such as LLM 120. An LLM prompt may comprise a set of instructions input to the LLM to elicit a desired output. Prompts may include various elements such as text, questions, images, commands, or examples that guide the LLM in generating an output. A prompt may include an instruction for the LLM to output a word split for a compound word that is also provided in the prompt. In some cases, a prompt may include one or more inputs, since many LLMs can contextually process multiple inputs and reference prior outputs. When determining word splits, prompt generator 112 may generate a plurality of prompts. Each prompt may be different. In some cases, the plurality of prompts may be provided as a single input to an LLM, such as when a single input comprises multiple sets of instructions. In other cases, the plurality of prompts may be provided as multiple inputs to an LLM.

In an aspect, prompt generator 112 generates prompts identifying example word splits for the LLM. In some cases, the example word splits are from a specific domain, thus providing the LLM with some additional context-relevant information it can use when generating a candidate word split responsive to the prompt. For instance, the examples can include a compound word and a corresponding word split for the compound word retrieved from a domain-specific dataset, such as domain-specific dataset 122a, which may also be referred to as a compound word-word split pair where a compound word is mapped to a corresponding word split in domain-specific dataset 122a. In an application of the technology reduced to practice, 1-5 examples taken from domain-specific dataset 122a have been used. However, any one or more example compound word-word split pairs may be used.

As an example, domain-specific dataset 122a can include previously identified word splits for a given compound word. The compound words included in domain-specific dataset 122a may be mined from domain-specific data source 122b. Domain-specific data source 122b may include data, such as images and text, from a specific domain. As an example, domain-specific data source 122b may include prior search queries and items purchased in response to search queries for an ecommerce domain. For a medical record domain, domain-specific data source 122b may include electronic medical records and other health information. For a finance domain, domain-specific data source 122b may include financial statements, stock market information, and the like. Compound words within these domains can be mined, e.g., identified and added, to domain-specific dataset 122a. In some cases, splits within domain-specific data source 122b corresponding to the mined compound words may be added to domain-specific data source 122b mapped to the compound words. In an aspect, a human-proposed word split for a compound word from domain-specific data source 122b may be mapped within a domain-specific dataset 122a. In yet another aspect, domain-specific dataset 122a may be partly or entirely human-generated, and may include compound words and their corresponding proposed word splits for use in a specific domain.

In an aspect, compound words within domain-specific data source 122b are identified based on word length or word frequency. A threshold may be set for each of word length, e.g., the number of characters in a word, and word frequency, e.g., the number of times a word is used relative to other words. Often, compound words are longer relative to non-compound words, and they also tend to appear less frequently. As such, providing a threshold value for the word length and frequency may help identify words likely to have word split variations. The threshold can be determined empirically, e.g., using different threshold values for a given data domain and observing whether the results comprise compound words.

In some aspects, a prompt may identify a specific role for the LLM to assume when it is generating an output. For example, the prompt may instruct the LLM to take on a role of a healthcare professional if the word split being determined is for a medical record context. Likewise, if the word split is for use in a finance context, the LLM could be instructed to take the role of a financial professional. Other roles and domains will be understood.

Having generated multiple prompts using prompt generator 112, the prompts can be provided to LLM 120. For each prompt, LLM 120 outputs one or more candidate word splits. In an aspect, LLM 120 generates one candidate word split output for each prompt. As a result of providing LLM 120 with multiple prompts, LLM 120 generates a plurality of candidate word split outputs. In an aspect, a candidate word split may comprise a variation of constituent words from the compound word, including constituent words that form shorter compound words. In some cases, the candidate word split may be the same as the compound word, e.g., the compound word itself is more contextually relevant without splitting it into constituent words.

In some aspects, a plurality of prompts is provided to the LLM at respectively different LLM temperatures. For instance, a first prompt can be provided to the LLM, where the LLM generates a candidate word split output based on a first temperature. A second prompt can be provided to the LLM, and the LLM generates a second candidate word split output based on a second temperature that is different from the first LLM temperature. Any number of prompts and temperatures may be used. In general, LLM temperature is a parameter that controls the randomness of the outputs generated by the LLM. It adjusts the likelihood of the model selecting less probable candidate word splits, thereby influencing the diversity and predictability of the responses. For some LLM models, a temperature of 0 may cause the LLM to produce a deterministic and predictable output. As the temperature increases away from 0, so too does the predictability. For these models, different temperatures at 0 or above may be used. In some cases, the LLM may have a configurable setting to adjust the LLM temperature for the model. In another aspect, the LLM receives an instruction or to generate a candidate word output at a specified temperature. In another case, the temperature of the LLM is provided in the prompt itself, thereby instructing the LLM on what temperature to use. Other methods for setting the temperature of the LLM may be used. All such methods are intended to be included as providing prompts to the LLM at a particular or respectively different temperatures.

In general, LLM 120 may be any AI (artificial intelligence) or machine learning model configured to understand and generate human language. LLM 120 may be a single model or a combination of models. LLM 120 may be trained on a general database corpus or a specific domain corpus. In some cases, LLM 120 is trained on a general corpus and then fine-tuned on a specific domain corpus.

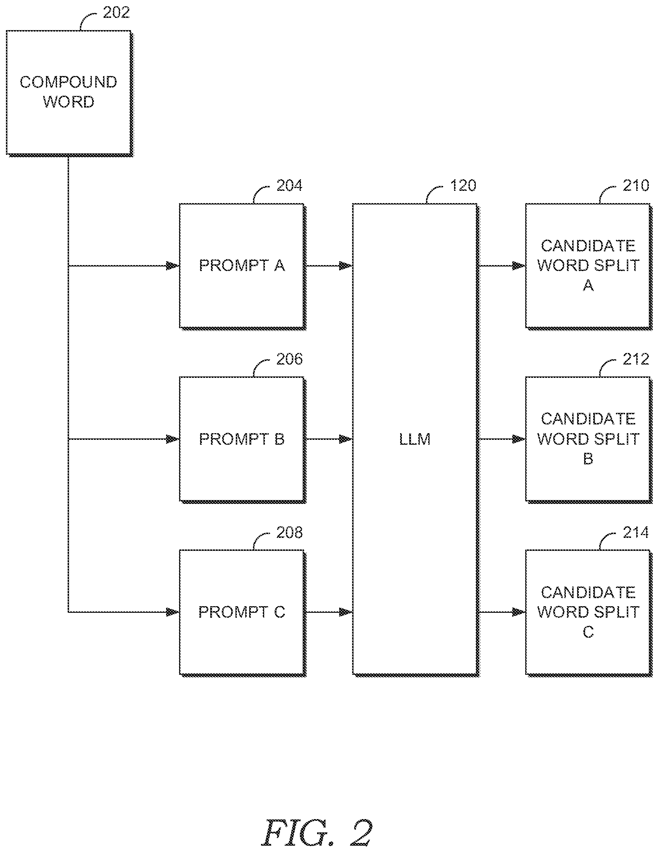

FIG. 2 illustrates an example in which candidate word splits are generated for a compound word 202 using LLM 120. Prompt generator 112 may generate a plurality of different prompts comprising prompt A 204, prompt B 206, and prompt C 208. Each of these prompts may be different, whether differentiated by temperature, role, examples, or other like aspects of the prompts. Prompts 204, 206, and 208 may be provided as a single input or multiple inputs to LLM 120 for generating a plurality of candidate word splits, respectively illustrated as candidate word split A 210, candidate word split B 212, and candidate word split C 214.

Referring back to FIG. 1 in general, having generated a plurality of candidate word splits, voting engine 114 can be used to select a candidate word split from the plurality for use as the word split for the compound word. To do so, voting engine 114 may use a voting technique. In some aspects, the voting technique is selected, or otherwise optimized, for use in selecting a candidate word split. In aspects, the voting technique is based on the specific domain use for splitting a compound word. For example, in an aspect, a specific domain for the compound word may be identified, and the voting technique may be selected based on the domain. As an example, the voting technique for a specific domain may be previously determined, and thus, when compound word engine 110 is employed for that specific domain, the previously determined voting technique may be selected from among a set of voting techniques, where each voting technique of the set corresponds to a specific domain.

In an aspect, the voting technique identifies a word split from the candidate word splits by determining that the identified word split was a majority candidate word split. As noted above, LLM 120 may output a plurality of candidate word splits. The candidate word splits may be the same or may be different, or any combination thereof. Using a previous example, the compound word "Arbeitshandschuhe" may be split in various ways, including (1) "Arbeitshandschuhe"; (2) "Arbeitshand" and "Schuhe"; (3) "Arbeit" and "Handschuhe"; (4) "Arbeitshand" and "Schuhe"; and (5) "Arbeit," "Hand," and "Schuhe." As such, if LLM 120 generates three candidate word splits as ["Arbeit/Handschuhe"; "Arbeit/Hand/Schuhe"; "Arbeit/Handschuhe"], then "Arbeit/Handschuhe" is a majority, since this candidate word split appears in two of three candidate word splits. Thus, in this example voting technique, the majority candidate word split is identified, and selector 116 may select it as the word split for the compound word.

In some cases, the voting technique identifies a word split from the candidate word splits based on a number of splits. For instance, the voting technique may identify a candidate word split having the highest number of splits into constituent words. In another aspect, the voting technique identifies a candidate word split having the lowest number of splits into constituent words. Optionally, this may be done as a response to determining that there is no majority candidate word split, as described above. The identified candidate word split can be selected as the word split for a compound word using selector 116. As an example, three candidate word splits for "Arbeitshandschuhe" might be ["Arbeit/Handschuhe"; "Arbeit/Hand/Schuhe"; "Arbeitshand/Schuhe"]. A voting technique identifying for the highest number of splits would identify "Arbeit/Hand/Schuhe" as having the highest number of splits, since it has been split twice, and the remaining candidate word splits were split only once. In another example, three candidate word splits for "Arbeitshandschuhe" might be ["Arbeitshandschuhe"; "Arbeit/Hand/Schuhe"; "Arbeitshand/Schuhe"]. If the voting technique is identifying based on the lowest number of splits, "Arbeitshandschuhe" would be identified and selected since it has no splits, and the remaining candidate word splits have one or two splits.

In aspects, voting engine 114 may employ an aggressive voting technique, a voting technique that selects a candidate word split based on the highest number of splits, or a non-aggressive voting technique that selects a candidate word split based on the lowest number of splits. In some cases, a selection between an aggressive and non-aggressive voting technique may be made based on the domain in which the compound word is used. To determine whether to use an aggressive or non-aggressive voting technique, each voting technique may be applied to determine word splits for compound words within domain-specific dataset 122a. The word splits selected as a result of the voting techniques can be compared to the word splits corresponding to the compound words of domain-specific dataset 122a. The voting technique having the greatest performance, or the voting technique that produces the most matching word splits, can be selected for use with the domain corresponding to domain-specific dataset 122a.

Additionally, aspects of the prompts generated by prompt generator 112 may be modified based on comparing matching word splits to those within domain-specific dataset 122a. For example, temperature, role, compound word-word split pair examples, or other like aspects of the prompts can be modified to improve performance of the system when compared to domain-specific dataset 122a.

In some cases, the voting technique selects a candidate word split at random. In an aspect, voting engine 114 identifies a random candidate word split from candidate word splits having the same number of splits. As an example, voting engine 114 may identify and select, using selector 116, a random candidate word split from among a subset of candidate word splits having a highest number of splits or a lowest number of splits. As described above, whether voting engine 114 identifies a candidate word split from a subset having the highest or lowest number of splits may be based on the domain in which the compound word was used. In an aspect, a random candidate word split may be identified when there is more than one candidate word split having the highest or lowest number of splits. In an aspect, voting engine 114 identifies a random candidate word split when there is no majority candidate word split, as previously described. In an aspect, voting engine 114 identifies a random word from a subset of candidate word splits having the highest number of splits or the lowest number of splits when there is no single candidate word split having the highest or lowest number of splits according to the particular voting technique.

For example, if candidate word splits for "Arbeitshandschuhe" is ["Arbeit/Handschuhe"; "Arbeit/Hand/Schuhe"; "Arbeitshand/Schuhe"], then when using a non-aggressive voting technique, a subset of "Arbeit/Handschuhe"; and "Arbeitshand/Schuhe" are identified as having a same lowest number of splits. In aspects, voting engine 114 may randomly select one of "Arbeit/Handschuhe" and "Arbeitshand/Schuhe." In another example, candidate words for "Arbeitshandschuhe" may be ["Arbeit/Handschuhe"; "Arbeitshandschuhe"; "Arbeitshand/Schuhe"]. Using an aggressing voting technique, voting engine 114 may identify "Arbeit/Handschuhe" and "Arbeitshand/Schuhe" as a subset of candidate word splits having the highest number of splits. Thus, in some implementations, voting engine 114 may randomly select one of "Arbeit/Handschuhe" and "Arbeitshand/Schuhe."

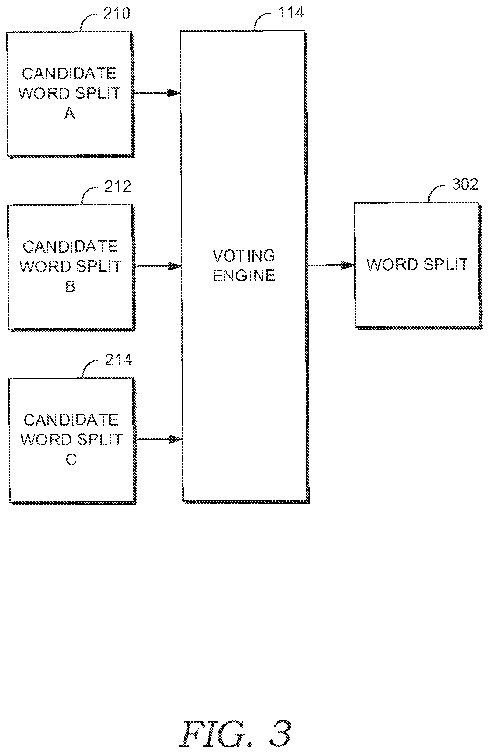

Referring also to FIG. 3, each of candidate word splits 210, 212, and 214 from FIG. 2 are provided to voting engine 114. Voting engine 114 applies a voting technique as described above to identify and select from one of candidate word split A 210, candidate word split B 212, and candidate word split C 214 as the output word split 302 for compound word 202 of FIG. 2.

Word splitting for a given compound word as provided by compound word engine 110 may be used for various applications. In an aspect, a compound word may be identified in a document or other text. The compound word may be replaced with a word split using the method discussed herein. In some cases, a word split may be identified in a document or other text, and the method described herein may be used to modify the text to include a compound word. For instance, this may be done using compound word index 124, as will be discussed.

In another aspect, compound word splitting is performed for identifying search results by search engine 118. In aspects, the text of a search result may have been modified to split a compound word into a word split of its constituent words. In other cases, the text of a search result may have been modified to include a compound word for a set of constituent words.

In an aspect, a search query is received and the search query includes a compound word. Like other aspects of the technology, the compound word may be identified by reference to an index, such as compound word index 124, based on its word length and word frequency, or another method. Using methods described herein, the identified compound word may be split into a word split of its constituent words. In an aspect, this is based on a domain in which the search engine is used, e.g., ecommerce, medical records, or other domain. The search query can be modified to include the word split or the compound word. Search engine 118 may execute a search for search results using a modified search query that includes the word split for the compound word.

As an example, search engine 118 may be a system configured to search for information across various networks, including the internet, intranets, or other specific databases. In an aspect, search engine 118 may be a general-purpose engine, such as those used for broad web searches, or configured for particular uses, such as searching within a specified database or dataset of a specific domain such as ecommerce, medical records, finance, and so forth.

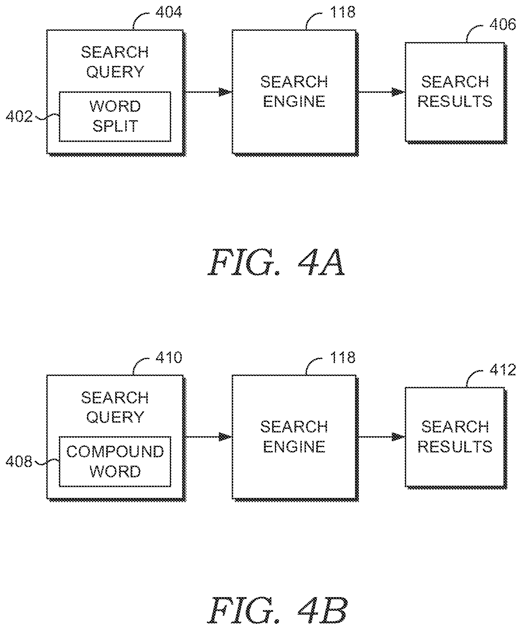

FIG. 4A illustrates search engine 118 performing a search using search query 404 having word split 402. Word split 402 may have been generated using compound word engine 110. In an aspect, word split 402 is generated in real time, meaning that compound word engine 110 is executed upon receipt of a compound word and generates word split 402. Search engine 118 outputs search results 406 in response to executing a search using word split 402. In another aspect, word split 402 is retrieved from an index, such as compound word index 124, upon receiving a compound word corresponding to word split 402. FIG. 4B illustrates an example in which search engine 118 executes a search using search query 410 having compound word 408. Compound word 408 may be determined from a set of constituent words using methods previously described. Search engine 118 outputs search results 412 in response to executing a search using compound word 408.

Aspects of the technology may also use compound word index 124 to facilitate word splitting. For example, compound words may be split into constituent words using methods described herein. The compound words can be mapped to their respective word splits as compound word-word split pairs within compound word index 124. As such, compound word index 124 provides a dataset that can be referenced by a computer system, e.g., through a database query, to retrieve split information. For instance, a compound word may be used to retrieve a word split. In another aspect, a set of constituent words may be used to retrieve a compound word. In aspects, compound word index 124 may be generated for a specific domain. In another aspect, the compound word-word split pair may include domain information, and retrieval of the split information may be done based on a specific domain identified in the database query. As an example, compound word index 124 may include multiple split variations, e.g., multiple compound word-word split pairs, for a particular compound word or set of constituent words mapped to specific domains. In such aspects, split information may be retrieved for a compound word or set of constituent words based on the respective domain.

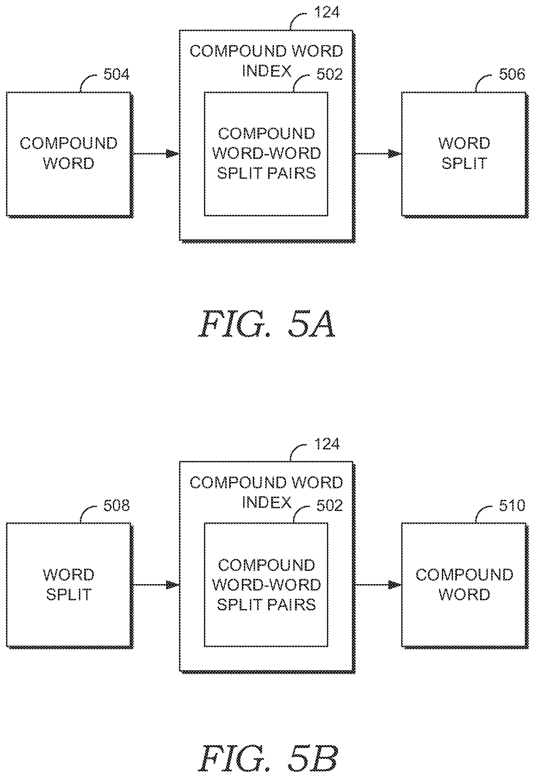

As illustrated in FIG. 5A, compound word index 124 comprises compound word-word split pairs 502. In an aspect, the compound word-word split pairs 502 are determined using compound word engine 110. Using a compound word 504, compound word index 124 can be referenced and word split 506 can be identified from the compound word-word split pairs 502. Word split 506 may be used by a search engine, or another application, such as to replace compound word 504 in a document or other text. Similarly, as illustrated in FIG. 5B, compound word index 124 can be referenced and compound word 510 can be identified from the compound word-word split pairs 502 for word split 508. Likewise, compound word 510 may be used by a search engine, or another application, such as to replace word split 508 in a document or other text.

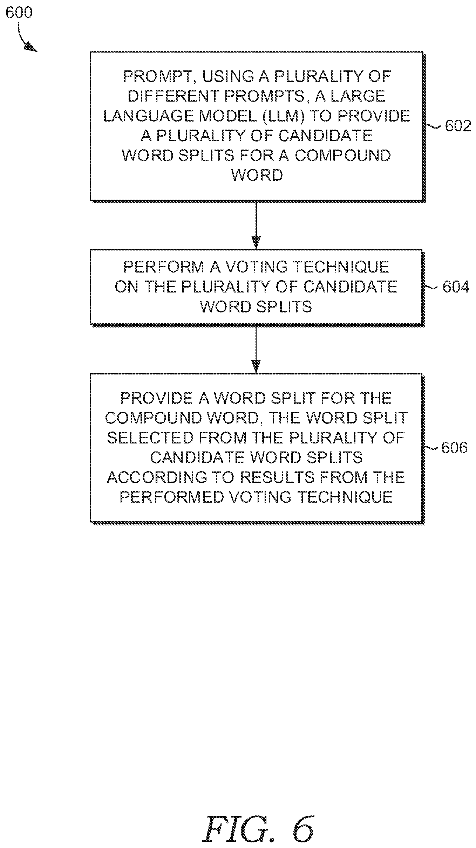

With reference now to FIGS. 6-7, block diagrams are provided respectively illustrating methods 600 and 700 for splitting compound words. Each block of the methods may comprise a computing process performed using any combination of hardware, firmware, or software. For instance, the methods can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few possibilities. The methods may be implemented in whole or in part by components of operating environment 100.

Turning first to FIG. 6, a block diagram having an example method 600 for splitting a compound word is provided. In block 602, method 600 prompts, using a plurality of different prompts, a large language model (LLM) to provide a plurality of candidate word splits for a compound word. The plurality of different prompts may comprise one or more inputs. Each prompt may include instructions to generate one or more candidate word splits for the compound word. In an aspect, one or more of the prompts comprise a different temperature. In an aspect, one or more of the prompts comprise a different role. In an aspect, one or more of the prompts include a different set of example compound word-word split pairs. In aspects, the compound word-word split pair may be retrieved from domain-specific dataset 122a. Prompt generator 112 may be employed to generate the prompts. The plurality of prompts may vary based on temperature, role, an example compound word-word split pair, or any other prompt feature, such as others described herein.

In an aspect, the compound word is identified from a text string in a document or other text, such as a search query or potential search result. For instance, the compound word may be identified based on word frequency and word length. For example, the compound word may be identified based on word frequency when it appears below a threshold number of times in a particular dataset, such as domain-specific data source 122b. Additionally or alternatively, the compound word may be identified when it has a word length, e.g., character count, greater than a threshold value.

In block 604, method 600 performs a voting technique on the plurality of candidate word splits. Voting engine 114 may be used to perform the voting technique and select a candidate word split. In an aspect, the voting technique identifies the word split from a majority candidate word split within the plurality of candidate word splits. In an aspect, the voting technique selects a candidate word split to provide as a word split for the compound word based on the candidate word split comprising either a most number of splits or a least number of splits. In some cases, this is done when there is no majority candidate word split. As noted, whether the voting technique selects for a most number of splits or a least number of splits may be based on the domain in which the compound word is used. In an aspect, the voting technique identifies a subset of the candidate word splits having a same number of splits and randomly selects one of the candidate word splits from the subset for the provided word split. In aspects, this may be done if there are more than one candidate word splits having a highest or lowest number of splits.

In block 606, method 600 provides a word split for the compound word according to the results from the performed voting technique.

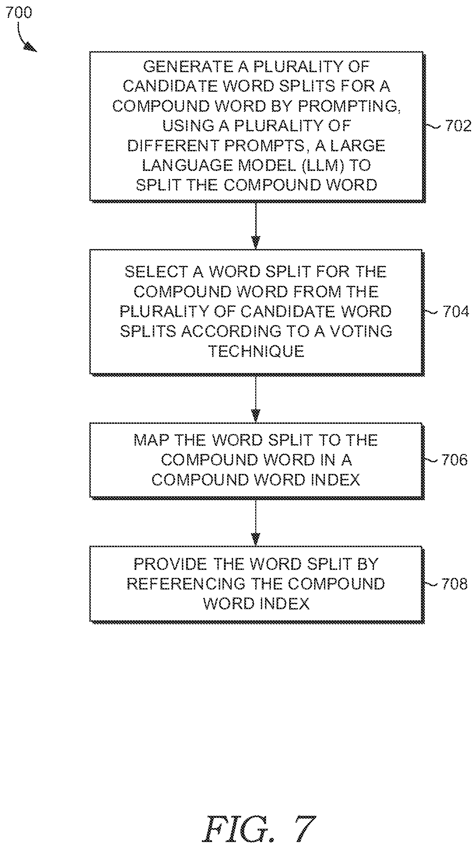

Referring now to FIG. 7, a flow chart having an example method 600 for splitting a compound word is provided. In block 702, method 700 generates a plurality of candidate word splits for a compound word by prompting, using a plurality of different prompts, a large language model (LLM) to split the compound word. The plurality of prompts may vary based on temperature, role, an example compound word-word split pair, or any other prompt feature, such as others described herein. In aspect, the plurality of different prompts is provided to the LLM at respectively different temperatures.

In block 704, method 700 selects a word split for the compound word from the plurality of candidate word splits according to a voting technique. The word split may be identified and selected from the candidate word splits, as described with respect to FIG. 6. Voting engine 114 may be used to identify and select the word split from among the candidate word splits.

In block 706, method 700 maps the word split to the compound word in a compound word index, such as compound word index 124. Compound word index 124 may comprise compound words mapped to (e.g., corresponding to) previously determined word splits.

In block 708, method 700, based on receiving the compound word from a computing device, provides the word split by referencing the compound word index. As noted previously, a compound word may be identified and received based on word frequency, word length, or both.

In another aspect, a word split (e.g., a set of constituent words) is received, and a compound word corresponding to the word split is identified, thus providing a compound word for an identified set of words.

Having described an overview of some embodiments of the present technology, an example computing environment in which embodiments of the present technology may be implemented is described below in order to provide a general context for various aspects of the present technology. Referring now to FIG. 8 in particular, an example operating environment for implementing embodiments of the present technology is shown and designated generally as computing device 800. Computing device 800 is but one example of a suitable computing environment and is not intended to suggest any limitation as to the scope of use or functionality of the technology. Computing device 800 should not be interpreted as having any dependency or requirement relating to any one or combination of components illustrated.

The technology may be described in the general context of computer code or machine-useable instructions, including computer-executable instructions, such as program modules, being executed by a computer or other machine, such as a cellular telephone, personal data assistant, or other handheld device. Generally, program modules, including routines, programs, objects, components, data structures, etc., refer to code that performs particular tasks or implements particular abstract data types. The technology may be practiced in a variety of system configurations, including handheld devices, consumer electronics, general-purpose computers, more specialty computing devices, etc. The technology may also be practiced in distributed computing environments where tasks are performed by remote-processing devices that are linked through a communications network.

With reference to FIG. 8, computing device 800 includes bus 802, which directly or indirectly couples the following devices: memory 804, one or more processors 806, one or more presentation components 808, input/output (I/O) ports 810, input/output components 812, and illustrative power supply 814. Bus 802 represents what may be one or more buses (such as an address bus, data bus, or combination thereof). Although the various blocks of FIG. 8 are shown with lines for the sake of clarity, in reality, delineating various components is not so clear, and metaphorically, the lines would more accurately be grey and fuzzy. For example, one may consider a presentation component, such as a display device, to be an I/O component. Also, processors have memory. The inventors recognize that such is the nature of the art, and reiterate that the diagram of FIG. 8 is merely illustrative of an example computing device that can be used in connection with one or more embodiments of the present technology. Distinction is not made between such categories as "workstation," "server," "laptop," "handheld device," etc., as all are contemplated within the scope of FIG. 8 and with reference to "computing device."

Computing device 800 typically includes a variety of computer-readable media. Computer-readable media can be any available media that can be accessed by computing device 800 and includes both volatile and non-volatile media, and removable and non-removable media. By way of example, and not limitation, computer-readable media may comprise computer storage media and communication media. Computer storage media, also referred to as a communication component, includes both volatile and non-volatile, removable and non-removable media implemented in any method or technology for storage of information, such as computer-readable instructions, data structures, program modules, or other data. Computer storage media includes, but is not limited to, RAM, ROM, EEPROM, flash memory, or other memory technology; CD-ROM, digital versatile disks (DVDs), or other optical disk storage; magnetic cassettes, magnetic tape, magnetic disk storage, or other magnetic storage devices; or any other medium that can be used to store the desired information and that can be accessed by computing device 800. Computer storage media does not comprise signals per se.

Communication media typically embodies computer-readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, radio frequency (RF), infrared, and other wireless media. Combinations of any of the above should also be included within the scope of computer-readable media.

Memory 804 includes computer storage media in the form of volatile or non-volatile memory. The memory may be removable, non-removable, or a combination thereof. Example hardware devices include solid-state memory, hard drives, optical-disc drives, etc. Computing device 800 includes one or more processors that read data from various entities, such as memory 804 or I/O components 812. Presentation component(s) 808 presents data indications to a user or other device. Example presentation components include a display device, speaker, printing component, vibrating component, etc.

I/O ports 810 allow computing device 800 to be logically coupled to other devices, including I/O components 812, some of which may be built-in. Illustrative components include a microphone, joystick, game pad, satellite dish, scanner, printer, wireless device, etc. The I/O components 812 may provide a natural user interface (NUI) that processes air gestures, voice, or other physiological inputs generated by a user. In some instances, inputs may be transmitted to an appropriate network element for further processing. An NUI may implement any combination of speech recognition, stylus recognition, facial recognition, biometric recognition, gesture recognition, both on screen and adjacent to the screen, as well as air gestures, head and eye tracking, or touch recognition associated with a display of computing device 800. Computing device 800 may be equipped with depth cameras, such as stereoscopic camera systems, infrared camera systems, RGB (red-green-blue) camera systems, touchscreen technology, other like systems, or combinations of these, for gesture detection and recognition. Additionally, the computing device 800 may be equipped with accelerometers or gyroscopes that enable detection of motion. The output of the accelerometers or gyroscopes may be provided to the display of computing device 800 to render immersive augmented reality or virtual reality. Power supply 814 may supply power to 800 or components thereof.

At a low level, hardware processors execute instructions selected from a machine language (also referred to as machine code or native) instruction set for a given processor. The processor recognizes the native instructions and performs corresponding low-level functions relating, for example, to logic, control, and memory operations. Low-level software written in machine code can provide more complex functionality to higher levels of software. As used herein, computer-executable instructions includes any software, including low-level software written in machine code; higher-level software, such as application software; and any combination thereof. Any other variations and combinations thereof are contemplated within embodiments of the present technology.

Referring to the drawings and description in general, having identified various components in the present disclosure, it should be understood that any number of components and arrangements might be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, or software. For instance, various functions may be carried out by a processor executing instructions stored in memory. As such, other arrangements and elements (e.g., machines, interfaces, functions, orders, and groupings of functions, etc.) can be used in addition to or instead of those shown.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the words "including," "having," and other like words and their derivatives have the same broad meaning as the word "comprising," and the word "accessing" comprises "receiving," "referencing," or "retrieving," or derivatives thereof. Further, the word "communicating" has the same broad meaning as the word "receiving" or "transmitting," as facilitated by software or hardware-based buses, receivers, or transmitters using communication media described herein.

In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (*a* or *b* thus includes either *a* or *b,* as well as *a* and *b*).

The term "rendering" comprises a digital rendering, such as when a computing device displays an object at a display device as an output component. The term is further intended to comprise a physical rendering, such as when a computing device prints an object using a printer as an output component.

The term "document" can be broadly described as any physical or digital medium that can record, convey, store, or display information or data in any form, including but not limited to text, images, symbols, graphs, charts, audiovisual elements, and the like. This comprises a wide range of formats such as printed paper, manuscripts, electronic files, digital canvases, web pages, images, drawings, and the like, or electronic outputs or displays thereof.

As further used herein, the term "train," when referring to training a machine learning model, may mean training an untrained model, further training a previously trained model, fine-tuning a pre-trained model, or the like. "Train" is intended to broadly cover methods of machine learning using a dataset.

For purposes of a detailed discussion above, embodiments of the present technology are described with reference to a distributed computing environment. However, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the schematics described herein, it is understood that the techniques described may be extended to other implementation contexts.

From the foregoing, it will be seen that this technology is one well-adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated by the accompanying drawings is to be interpreted as illustrative and not in a limiting sense.

Some example aspects that can be practiced from the foregoing description include the following:
Aspect 1: A computer-implemented method comprising: prompting, using a plurality of different prompts, a large language model (LLM) to provide a plurality of candidate word splits for a compound word; performing a voting technique on the plurality of candidate word splits; and providing a word split for the compound word, the word split selected from the plurality of candidate word splits according to results from the performed voting technique.
Aspect 2: Aspect 1, wherein the plurality of prompts is provided to the LLM at respectively different temperatures.
Aspect 3: Any of Aspects 1-2, wherein the plurality of prompts includes one or more compound word-word split pairs mined from a domain-specific data source.
Aspect 4: Any of Aspects 1-3, further comprising identifying and selecting the compound word based on at least one of word frequency or word length.
Aspect 5: Any of Aspects 1-4, wherein the voting technique identifies the word split from a majority candidate word split within the plurality of candidate word splits.
Aspect 6: Any of Aspects 1-4, wherein the voting technique comprises: determining that the plurality of candidate word splits from the LLM excludes a majority candidate word split; and based on the plurality of candidate word splits not including a majority candidate word split, selecting a candidate word split for the provided word split based on the candidate word split comprising either a most number of splits or a least number of splits.
Aspect 7: Any of Aspects 1-4, wherein the voting technique comprises: responsive to determining the plurality of candidate word splits from the LLM excludes a majority candidate word split, identifying a subset of the candidate word splits having a same number of splits; and randomly selecting one of the candidate word splits from the subset for the provided word split.
Aspect 8: One or more computer storage media having computer-readable instructions stored thereon that, when executed by a processor, cause the processor to perform a method comprising: receiving a search query; generating a plurality of candidate word splits for a compound word within the search query by prompting, using a plurality of different prompts, a large language model (LLM) to split the compound word; selecting a word split for the compound word from the plurality of candidate word splits according to a voting technique; and executing a search for the search query using the selected word split.
Aspect 9: Aspect 8, wherein the plurality of prompts is provided to the LLM at respectively different temperatures.
Aspect 10: Any of Aspects 8-9, wherein the plurality of prompts includes one or more compound word-word split pairs mined from a domain-specific data source.
Aspect 11: Any of Aspects 8-10, further comprising identifying and selecting the compound word based on word frequency or word length.
Aspect 12: Any of Aspects 8-11, wherein the voting technique identifies the word split from a majority candidate word split within the plurality of candidate word splits.
Aspect 13: Any of Aspects 8-11, wherein the voting technique comprises: determining that the plurality of candidate word splits from the LLM excludes a majority candidate word split; and based on the plurality of candidate word splits not including a majority candidate word split, selecting a candidate word split for the provided word split based on the candidate word split comprising either a most number of splits or a least number of splits.
Aspect 14: Any of Aspects 8-11, wherein the voting technique comprises: identifying a subset of the candidate word splits having a same number of splits; and randomly selecting one of the candidate word splits from the subset as the word split.
Aspect 15: A system comprising: at least one processor; and one or more computer storage media storing computer-readable instructions thereon that, when executed by the at least one processor, cause the at least one processor to perform a method comprising:
   generating a plurality of candidate word splits for a compound word by prompting, using a plurality of different prompts, a large language model (LLM) to split the compound word;
   selecting a word split for the compound word from the plurality of candidate word splits according to a voting technique; mapping the word split to the compound word in a compound word index; and based on receiving the compound word from a computing device, providing the word split by referencing the compound word index.
Aspect 16: Aspect 15, wherein the plurality of prompts comprises at least one of: different temperature instructions for the LLM; and one or more compound word-word split pairs mined from a domain-specific data source.
Aspect 17: Any of Aspects 15-16, wherein the compound word is received based on a combination of word frequency and word length for the compound word.
Aspect 18: Any of Aspects 15-17, wherein the voting technique identifies the word split from a majority candidate word split within the plurality of candidate word splits.
Aspect 19: Any of Aspects 15-17, wherein the voting technique comprises: determining that the plurality of candidate word splits from the LLM does not include a majority candidate word split; and based on the plurality of candidate word splits not including a majority candidate word split, selecting a candidate word split for the provided word split based on the candidate word split comprising either a most number of splits or a least number of splits.
Aspect 20: Any of Aspects 15-17, wherein the voting technique comprises: identifying a subset of the candidate word splits having a same number of splits; and randomly selecting one of the candidate word splits from the subset as the word split.
Any of Aspects 1-7 may be embodied on computer-readable media or as a computing system. Any of Aspects 8-14 may be embodied as a computing system or a computerized method. Any of Aspects 15-20 may be embodied as a computerized method or on computer-readable media.

## Claims

1. A computer-implemented method comprising:
prompting, using a plurality of different prompts, a large language model (LLM) to provide a plurality of candidate word splits for a compound word;
performing a voting technique on the plurality of candidate word splits; and
providing a word split for the compound word, the word split selected from the plurality of candidate word splits according to results from the performed voting technique.

2. The method of claim 1, wherein the plurality of prompts is provided to the LLM at respectively different LLM temperatures.

3. The method of claim 1 or 2, wherein the plurality of prompts includes one or more compound word-word split pairs mined from a domain-specific data source.

4. The method of any one of the preceding claims, further comprising identifying and selecting the compound word based on at least one of a combination of word frequency or word length.

5. The method of any one of the preceding claims, wherein the voting technique identifies the word split from a majority candidate word split within the plurality of candidate word splits.

6. The method of any one of the preceding claims, wherein the voting technique comprises:
determining that the plurality of candidate word splits from the LLM excludes a majority candidate word split; and
based on the plurality of candidate word splits not including a majority candidate word split, selecting a candidate word split for the provided word split based on the candidate word split comprising either a most number of splits or a least number of splits.

7. The method of any one of the preceding claims, wherein the voting technique comprises:
responsive to determining the plurality of candidate word splits from the LLM excludes a majority candidate word split, identifying a subset of the candidate word splits having a same number of splits; and
randomly selecting one of the candidate word splits from the subset for the provided word split.

8. One or more computer storage media having computer-readable instructions stored thereon that, when executed by a processor, cause the processor to perform a method comprising:
receiving a search query;
generating a plurality of candidate word splits for a compound word within the search query by prompting, using a plurality of different prompts, a large language model (LLM) to split the compound word;
selecting a word split for the compound word from the plurality of candidate word splits according to a voting technique; and
executing a search for the search query using the selected word split.

9. The media of claim 8, wherein the plurality of prompts is provided to the LLM at respectively different LLM temperatures; and/or
wherein the plurality of prompts includes one or more compound word-word split pairs mined from a domain-specific data source.

10. The media of claim 8 or 9, further comprising identifying and selecting the compound word based on word frequency or word length.

11. The media of any one of claims 8 to 10, wherein the voting technique identifies the word split from a majority candidate word split within the plurality of candidate word splits; and/or
wherein the voting technique comprises:
determining that the plurality of candidate word splits from the LLM excludes a majority candidate word split; and
based on the plurality of candidate word splits not including a majority candidate word split, selecting a candidate word split for the provided word split based on the candidate word split comprising either a most number of splits or a least number of splits;
and/or wherein the voting technique comprises:
identifying a subset of the candidate word splits having a same number of splits; and
randomly selecting one of the candidate word splits from the subset as the word split.

12. A system comprising:
at least one processor; and
one or more computer storage media storing computer-readable instructions thereon that, when executed by the at least one processor, cause the at least one processor to perform a method comprising:
generating a plurality of candidate word splits for a compound word by prompting, using a plurality of different prompts, a large language model (LLM) to split the compound word;
selecting a word split for the compound word from the plurality of candidate word splits according to a voting technique;
mapping the word split to the compound word in a compound word index; and
based on receiving the compound word from a computing device, providing the word split by referencing the compound word index.

13. The system of claim 12, wherein the plurality of prompts comprises different temperature instructions for the LLM.

14. The system of claim 12 or 13, wherein the compound word is received based on a combination of word frequency and word length for the compound word.

15. The system of any one of claims 12 to 14, wherein the voting technique identifies the word split from a majority candidate word split within the plurality of candidate word splits; and/or
wherein the voting technique comprises:
determining that the plurality of candidate word splits from the LLM excludes a majority candidate word split; and
based on the plurality of candidate word splits not including a majority candidate word split, selecting a candidate word split for the provided word split based on the candidate word split comprising either a most number of splits or a least number of splits;
and/or wherein the voting technique comprises:
identifying a subset of the candidate word splits having a same number of splits; and
randomly selecting one of the candidate word splits from the subset as the word split.
